# EUROPÄISCHE PATENTSCHRIFT

(11) **EP 1 854 662 B1**
(45) Veröffentlichungstag und Bekanntmachung des Hinweises auf die Patenterteilung: **09.06.2010**
(21) Anmeldenummer: 06009713.6
(22) Anmeldetag: 11.05.2006
(51) Int. Cl.: B60P 1/34, B60P 1/32

(54) **Kippfahrzeug**
Dump truck
Véhicule à benne basculante

(43) Veröffentlichungstag der Anmeldung: 14.11.2007
(73) Patentinhaber: Barth, Roland, 72296 Schopfloch (DE)
(72) Erfinder: Barth, Roland, 72296 Schopfloch (DE)
(74) Vertreter: Späth, Dieter

(56) Entgegenhaltungen:
- DE-U1- 9 108 613
- FR-A- 2 587 671
- GB-A- 2 101 961
- GB-A- 2 142 308
- US-A- 4 951 999
- US-B1- 6 752 467
- PATENT ABSTRACTS OF JAPAN Bd. 016, Nr. 007 (M-1198), 9. Januar 1992 (1992-01-09) & JP 03 231043 A (JIDOSHA SEIKO KK), 15. Oktober 1991 (1991-10-15)

## Beschreibung

Die Erfindung betrifft ein Kippfahrzeug, insbesondere Tieflader, das ein Gestell und eine kippbar auf dem Gestell angeordnete Ladepritsche aufweist, die von einer in etwa horizontalen Transportstellung in eine geneigte Schüttstellung und umgekehrt schwenkbar ist, mit den Merkmalen des Oberbegriffs des Anspruchs 1. Unter Kippfahrzeug soll vorzugsweise ein Landfahrzeug in der Ausführungsform als Antriebswagen oder als Anhänger verstanden werden.

Derartige Kippfahrzeuge sind vielfältig bekannt. Ihre hochschwenkbare Ladepritsche erlaubt ein bequemes Entladen von Schüttgut durch Kippen. Dabei wird bei dem derzeitigen Stand der Technik die Ladepritsche um eine feste Drehachse, beispielsweise an einem in Vorwärtsfahrtrichtung hinteren Ende des Gestells des Kippfahrzeugs, geschwenkt, wodurch die Ladepritsche so stark geneigt wird, dass das Schüttgut aufgrund der Schwerkraft über eine am hinteren Ende der Ladepritsche verlaufende Schüttkante von der Ladepritsche rutscht.

Um ein vollständiges Abrutschen des Schüttgutes zu ermöglichen, sollte die Ladepritsche in der Schüttstellung eine möglichst steile Neigung und die Schüttkante einen möglichst großen Bodenabstand aufweisen. Jedoch bewegt sich die Schüttkante der Ladepritsche bei bekannten Kippfahrzeugen mit fester Drehachse beim Kippen auf einer Kreisbogenbahn um die Drehachse nach unten. Um sicherzustellen, dass im gekippten Zustand der Ladepritsche noch genügend Bodenfreiheit zur Ausbildung eines hohen Schüttkegels vorhanden ist, wird üblicherweise die Ladepritsche mit einem hohen Bodenabstand auf dem Kippfahrzeug angeordnet. Dies erschwert jedoch das Beladen des Kippfahrzeugs von Hand wesentlich und führt zu einem hohen Schwerpunkt des beladenen Kippfahrzeugs, was unerwünscht ist.

Dem gegenüber wird bei einer geringen Höhe der Ladepritsche, die die Beladung von Hand vereinfacht, beim Abkippen des Schüttgutes nur ein niedriger Schüttkegel ausgebildet, dessen Spitze, sobald sie die Schüttkante erreicht, ein weiteres Abrutschen des noch auf der Ladepritsche befindlichen Schüttgutes verhindert. Die Ladepritsche kann dann nur vollständig entleert werden, indem das Kippfahrzeug nach vorne von dem Schüttkegel weg bewegt wird, so dass sich ein weiterer Schüttkegel ausbilden kann.

Zur Lösung dieses Problems ist es aus dem Stand der Technik bekannt, die Ladepritsche um eine in ihrer Position zum Gestell veränderbare Drehachse zu schwenken. Zu Kippfahrzeugen, bei denen die Drehachse abgesenkt bzw. angehoben und auch horizontal bewegt werden kann, wird beispielhaft auf die GB 2 101 961 A und US 9,951,999 verwiesen.

Die gattungsgemäße GB 2 101 961 beschreibt einen Lastwagen mit einem Hubrahmen, der an einem in Vorwärtsfahrtrichtung hinteren Ende eines Fahrgestells schwenkbar befestigt ist. Der Hubrahmen dient zum Tragen, Fixieren und Kippen einer absetzbaren Lademulde. Ein hydraulischer Kippzylinder ist an einem mittleren Bereich des Hubrahmens und des Fahrgestells angelenkt, mit dem der Hubrahmen angehoben, abgesenkt und gekippt werden kann. Der Hubrahmen ist mit dem Gestell über mindestens ein Paar in Vorwärtsfahrtrichtung vor und hinter dem Kippzylinder angeordneten Koppelstangen mit dem Fahrgestell schwenkbar verbunden, wobei die vorderen Koppelstangen von dem Hubrahmen lösbar sind, um eine Kippbewegung des Hubrahmens zu ermöglichen. Die hintere Koppelstange ist mit einem Ende unlösbar mit einer Drehachse des Hubrahmens und mit dem anderen Ende mit einer Drehachse des Fahrgestells beweglich verbunden. Beidseitig am Lastwagen erstreckt sich weiterhin zwischen den beiden Koppelstangen eine am Fahrgestell angelenkte Kippstange von dem Fahrgestell zu dem Hubrahmen, die länger als die hintere Koppelstange ausgebildet und über eine verriegelbare Kniehebelverbindung schwenkbar mit dem Hubrahmen verbunden ist. Die hintere Koppelstange und die Kippstange bilden mit dem Fahrgestell und dem Hubrahmen jeweils ein Viergelenk. Dies ermöglicht, dass bei vom Hubrahmen gelöster vorderer Koppelstange und verriegelter Kniehebelverbindung der Kippstange beim Kippen der vom Hubrahmen getragenen Lademulde die Schüttkante der Lademulde angehoben wird.

Die US 9,951,999 beschreibt einen Lastwagen mit einer nicht absetzbaren Lademulde, die ebenfalls angehoben, abgesenkt und gekippt werden kann. Ein Tragrahmen der Lademulde ist mit einem Fahrzeugchassis des Lastwagens jeweils in einem in Vorwärtsfahrtrichtung hinteren und mittleren Bereich des Tragrahmens und des Fahrzeugchassis mit einem Zweigelenkgestänge schwenkbar verbunden. Das vordere und das hintere Zweigelenkgestänge sind unabhängig voneinander durch je einen hydraulischen Antriebszylinder schwenkbar, so dass die Lademulde in beliebiger Weise angehoben und gekippt werden kann. Dabei wird ein mittlerer Bereich der Lademulde durch eine sich zwischen einem hinteren Ende des Fahrzeugchassis und einem mittleren Bereich des Tragrahmens erstreckende und mit diesen gelenkig verbundene Koppelstange kreisbogenförmig geführt. Beim Anheben der Lademulde allein im vorderen Bereich wird die Schüttkante wie üblich nach unten bewegt. Dies kann durch gleichzeitiges Anheben der Lademulde im hinteren Bereich verhindert werden, wodurch die Schüttkante nach oben und gleichzeitig nach hinten, d.h. vom Zentrum des Chassis weg bewegt wird.

Weiterer Nachteil bei herkömmlichen Kippfahrzeugen ist, dass beim Schwenken der Ladepritsche von der Transportstellung in die Schüttstellung der Schwerpunkt des Kippfahrzeuges durch die Schwerpunktverlagerung der beladenen Ladepritsche zum Fahrzeugende hin verlagert wird, wodurch die Gefahr besteht, dass das Fahrzeug vorne angehoben und damit instabil wird und sogar umkippen kann.

Der Erfindung liegt die Aufgabe zugrunde, Kippfahrzeuge der vorgehend beschriebenen Art dahingehend zu verbessern, dass Lade- und Entladearbeiten erleichtert werden und dass insbesondere ein Entleeren der Ladepritsche bei stehendem Kippfahrzeug verbessert ist.

Diese Aufgabe wird erfindungsgemäß durch ein Kippfahrzeug mit den Merkmalen des Anspruchs 1 gelöst. Weitere vorteilhafte Ausgestaltungen sind den Unteransprüchen zu entnehmen.

Beim erfindungsgemäßen Kippfahrzeug bewegt sich die Schüttkante nach oben, wenn die Ladepritsche gekippt, d.h. aus einer in etwa horizontalen Transportstellung in eine geneigte Schüttstellung hochgeschwenkt wird. Gleichzeitig wird die Schüttkante horizontal zum Zentrum des Gestells hin bewegt. Unter Schüttkante wird dabei dasjenige Ende der Ladepritsche verstanden, über das geladenes Schüttgut beim Schwenken der Ladepritsche von der Transportstellung in die Schüttstellung von der Ladepritsche rutscht. Die Ladepritsche des Kippfahrzeuges ist an oder nahe einem die Schüttkante aufweisenden Ende schwenkbar an einem Gestell des Kippfahrzeugs angelenkt, so dass die Ladepritsche beim Schwenken in die Schüttstellung automatisch um eine Schwenkachse gekippt wird, die vorzugsweise schüttkantennah vorgesehen ist. Die Schwenkachse ist gegenüber dem Stand der Technik nicht fest, sondern beweglich am Gestell des Kippfahrzeugs angeordnet. Somit ist eine Höhenlage der Schwenkachse und eine Bodenfreiheit der Schüttkante der Ladepritsche während des Schwenkens der Ladepritsche von der Transportstellung in die Schüttstellung und umgekehrt veränderbar. Die Veränderung der Höhe der Schwenkachse der Ladepritsche erfolgt vorzugsweise zwangsläufig, so dass beim Kippen der Ladepritsche des Kippfahrzeuges abhängig von der Schwenkrichtung der Ladepritsche die Schwenkachse nach oben bzw. nach unten und damit automatisch die Schüttkante der Ladepritsche entsprechend nach oben bzw. nach unten bewegt wird.

So ist es möglich, die Ladepritsche mit geringem Bodenabstand an dem Kippfahrzeug anzuordnen, was die manuelle Beladung in der Transportstellung der Ladepritsche erleichtert und den Schwerpunkt des beladenen Kippfahrzeuges senkt, und die Bodenfreiheit der Schüttkante beim Kippen in die Schüttstellung zu vergrößern, so dass sich ein beim Abkippen des Schüttgutes bildender Schüttkegel breiter und höher erstrecken kann als bei herkömmlichen Kippfahrzeugen. Dies hat außerdem den Vorteil, dass bei einer an eine Ladekapazität der Ladepritsche angepassten Hubbewegung der Schüttkante eine vollständige Entleerung der Ladepritsche möglich ist, ohne das Kippfahrzeug von dem Schüttkegel weg zu bewegen.

Das Schwenken der Ladepritsche in die Schüttstellung bewirkt eine Horizontalbewegung der Ladepritsche zu dem Zentrum des Gestells hin. Damit wird auch der Schwerpunkt der Ladepritsche mit dem geladenen Schüttgut in Richtung des Zentrums des Gestells verlagert, so dass das Kippfahrzeug nicht in die der Schüttkante zugeordnete Richtung kippt. Die Bewegung der Schüttkante in horizontaler Richtung erfolgt durch entsprechendes Bewegen der Schwenkachse der Ladepritsche unter gleichzeitiger Anhebung des der Schüttkante gegenüberliegenden Endes der Ladepritsche, wobei dessen horizontaler Abstand zum Zentrum des Gestells im Wesentlichen unverändert bleibt. Der Abstand der Schüttkante der Ladepritsche zum Zentrum des Gestells ist während des Schwenkens der Ladepritsche von der Transportstellung in die Schüttstellung und umgekehrt veränderbar. Die Veränderung des Abstands kann dabei zwangsläufig erfolgen, so dass beim Kippen der Ladepritsche des Kippfahrzeuges die Schüttkante der Ladepritsche automatisch zum Zentrum des Gestells hin bzw. vom Zentrum des Gestells weg bewegt wird. Die Bewegung der Schüttkante beim Abkippen des Schüttgutes von einer Mittelachse des Schüttkegels weg in Richtung des Zentrums des Gestells zeigt die gleiche Wirkung wie ein Bewegen des Fahrzeugs in die entsprechende Richtung. Das erfindungsgemäße Kippen kann nicht nur nach hinten sondern beispielsweise auch zur Seite erfolgen.

Die Bewegungen der Schüttkante in horizontaler und in vertikaler Richtung sind miteinander kombiniert bzw. miteinander gekoppelt, wodurch man ein vollständiges Entleeren der Ladepritsche beim Kippen von in der Transportstellung in die Schüttstellung trotz niedrig angeordneter Ladepritsche erreicht. So ist es möglich, die Ladepritsche in einem besonders geringen Bodenabstand anzuordnen, wodurch speziell das manuelle Beladen vereinfacht wird. Beim Schwenken der Ladepritsche von der Transportstellung in die Schüttstellung erhöht sich der Neigungswinkel der Ladepritsche bei gleichzeitiger Aufwärtsbewegung und horizontaler Verschiebung der Schüttkante in Richtung des Zentrums des Gestells des Kippfahrzeuges. Dadurch ergibt sich eine höhere und kegelförmige Aufschüttung, deren Grundfläche kleiner ist als bei dem Stand der Technik entsprechenden Kippfahrzeugen, bei denen das Kippfahrzeug während des Abrutschens des Schüttgutes von dem Schüttkegel weg bewegt werden muss. Somit ist eine Platz sparende Aufschüttung möglich.

Die Ladepritsche, die üblicherweise eine langgestreckte Form aufweist, kann in Bewegungsrichtung des Fahrzeugs an einer ihrer Längsseiten oder an einem hinteren Ende mit dem Gestell schwenkbar verbunden sein. In einer bevorzugten Ausführungsform ist die Ladepritsche an einem in Vorwärtsfahrtrichtung hinteren Ende des Gestells angelenkt, wodurch das Kippfahrzeug nach dem Abkippen des Schüttgutes ohne Beeinträchtigung des Schüttkegels von diesem entfernt werden kann, so dass die Platz sparende Aufschüttung unverändert bleibt. Bei dem erfindungsgemäßen Kippfahrzeug kann die Ladepritsche auch bei parallel zur Bewegungsrichtung des Kippfahrzeuges vorgesehener Schüttkante vollständig durch Kippen entleert werden.

In einer vorteilhaften Ausführungsform der Erfindung ist die Ladepritsche nach Art eines viergliedrigen Koppelgetriebes an zwei beabstandeten Stellen gelenkig mit dem Gestell an zwei sich gegenüber liegenden Seiten gekoppelt. Unter Koppelgetriebe wird dabei ein Umlenkmechanismus auf Basis eines Viergelenkes verstanden. Solche Koppelgetriebe sind als ungleichmäßig übersetzende Getriebe bekannt. Das viergelenkige Koppelgetriebe besteht logisch gesehen aus vier gelenkig miteinander verbundenen Stangen oder dergleichen als Getriebeglieder und besitzt genau einen Freiheitsgrad, wobei als Antriebsglied beispielsweise ein Hebel auf ein erstes der Getriebeglieder einwirken kann. Bei dem erfindungsgemäßen Kippfahrzeug bilden das Gestell und die Ladepritsche zwei der vier Getriebeglieder. Die Kopplung der Ladepritsche mit dem Gestell kann abhängig von der gewünschten Kipprichtung der Ladepritsche in Bewegungsrichtung des Fahrzeugs an Längsseiten oder an Querseiten des Kippfahrzeugs erfolgen. Dabei können das Gestell und/oder die Ladepritsche Teil des Koppelgetriebes sein. Es ist auch möglich, ein separates viergliedriges Koppelgetriebe zu verwenden und zwei gegenüber liegende Koppelglieder mit dem Gestell bzw. der Ladepritsche starr zu verbinden. Dabei ist das der Schüttkante nahe, die Ladepritsche mit dem Gestell verbindende erste Koppelglied gelenkig mit der Ladepritsche und dem Gestell bzw. mit den entsprechend zugeordneten Koppelgliedern verbunden, wodurch das Kippfahrzeug ein bezüglich des Gestells auf einer Kurvenbahn bewegliches Schwenklager für die Ladepritsche aufweist. So kann die Schwenkachse der Ladepritsche, die von einer Gelenkachse des Koppelgetriebes gebildet ist, beim Kippen der Ladepritsche durch Schwenken des ersten Koppelgliedes entlang einer Kreisbahn geführt werden, wodurch die Schüttkante zwangsläufig die gewünschte Bewegung, gleichzeitig nach oben und in Richtung des Zentrums des Gestells ausführt.

Vorzugsweise weisen das erste und ein zweites, dem ersten Kopplungsglied gegenüber liegendes Koppelglied, die beide zwischen dem Gestell und der Ladepritsche angeordnet sind, eine unterschiedliche Länge auf, wobei das erste, kürzere Kopplungsglied näher als das zweite an der Schüttkante der Ladepritsche angeordnet ist. Durch die unterschiedlichen Schwenkradien der dem Gestell gegenüber liegenden Gelenkachsen ergibt sich die gewünschte Bewegung der Ladepritsche und damit zwangsläufig auch die der Schüttkante. Durch die Veränderung der Lage der Gelenkachsen und der Länge der Koppelelemente kann die Kippfunktion an verschiedene Anforderungen angepasst werden.

In einer Ausführungsform der Erfindung weist das zweite, längere Kopplelglied, das der Schüttkante fern drehbar am Gestell gelagert ist, einen seitlich abstehenden Hebelarm zur Einleitung einer Kraft zum Kippen der Ladepritsche auf. Die über den Hebelarm eingeleitete Kraft bewirkt ein Moment auf das Koppelglied, das das Koppelglied schwenkt, das Koppelglied antreibt und die Ladepritsche kippt. Der Hebelarm kann in der Transportstellung der Ladepritsche sich vorzugsweise nach oben oder nach unten erstrecken. Das Kippen der Ladepritsche von der Transportstellung in die Kippstellung erfolgt unter Einwirkung einer Druck- oder Zugkraft an einem freien Ende des Hebelarmes, wodurch ein entsprechendes Moment eingeleitet wird, das die Ladepritsche schwenkt. Dabei wird das von der Schüttkante entfernte Ende der Ladepritsche angehoben und in vertikaler Richtung vom Gestell weg bewegt, während gleichzeitig das der Schüttkante nahe Ende der Ladepritsche in vertikaler und/oder horizontaler Richtung bewegt wird. Abhängig von einer Geometrie des Koppelgetriebes kann sich das von der Schüttkante entfernte Ende der Ladepritsche beim Kippen im Wesentlichen nur vertikal und nicht oder nur wenig horizontal bewegen.

Vorteilhafterweise erfolgt die Einleitung des Momentes zum Schwenken der Ladepritsche mittels einer Hubeinrichtung, vorzugsweise einem Hydraulikzylinder, der mit einem Ende am Gestell und mit einem anderen Ende an einem freien Ende des Hebelarms des zweiten Koppelgliedes oder jedenfalls mit Abstand vom Koppelglied gelenkig am Hebelarm befestigt ist. Die Hubeinrichtung kann auch pneumatisch oder elektrisch angetriebenen sein und einen Hubzylinder aufweisen, der teleskopierbar ist. Die Hubeinrichtung wirkt als Antrieb für das Koppelgetriebe, das die Ladepritsche in vertikaler sowie in horizontaler Richtung gleichzeitig bewegen kann. Grundsätzlich ist das Kippen der Ladepritsche auch ohne den Hebelarm mit beispielsweise einem teleskopierbaren Hydraulikzylinder möglich, der sich gelenkig am Gestell abstützt und mit seinem anderen Ende an der Ladepritsche angreift.

Der Gegenstand der vorliegenden Erfindung ergibt sich nicht nur aus dem Gegenstand der einzelnen Schutzansprüche, sondern auch aus der Kombination der einzelnen Schutzansprüche untereinander. Alle in den Unterlagen offenbarten Merkmale, insbesondere die in der Zeichnung dargestellte Ausbildung, werden als erfindungswesentlich beansprucht, soweit sie einzeln oder in Kombination miteinander gegenüber dem Stand der Technik neu sind.

Nachfolgend wird die Erfindung anhand eines in der Zeichnung dargestellten Ausführungsbeispiels näher erläutert. Hierbei gehen aus den Figuren der Zeichnung und ihrer Beschreibung weitere wesentliche Merkmale und Vorteile der Erfindung hervor. Es zeigen:
- Figur 1: eine Seitenansicht des erfindungsgemäßen Kippfahrzeuges in verschiedenen Kippstellungen; und
- Figur 2: eine schematische Darstellung des viergliedrigen Koppelgetriebes des Kippfahrzeuges gemäß Figur 1.

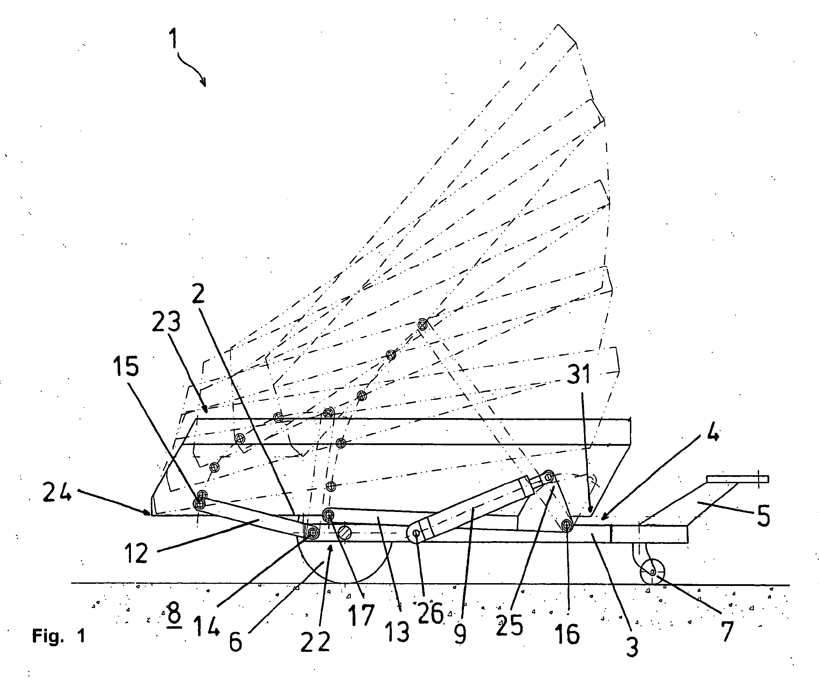

Figur 1 zeigt das erfindungsgemäße Kippfahrzeug 1 in Form eines Anhängers, mit einer Ladepritsche 2, die mit einem Gestell 3 gelenkig verbunden ist. Der Gestell 3 weist an einem vorderen Ende 4 eine Deichsel 5 auf und wird von Rädern 6 und einem Stützrad 7 für die Deichsel 5 getragen, die auf einem Boden 8 aufstehen.

Die Ladepritsche 2 ist mit einer Hubeinrichtung 9 von einer in etwa horizontalen Transportstellung, die in der Figur 1 mit durchgezogenen Linien dargestellt ist, in eine Schüttstellung und umgekehrt schwenkbar, wobei eine Neigung einer Ladepritsche 2, ausgehend von der Transportstellung, stetig zunimmt. Die Figur 1 zeigt außerdem verschiedene Kippstellungen der Ladepritsche 2 bis zum Erreichen der Schüttstellung, die mit gestrichelten Linien in der Zeichnung dargestellt sind.

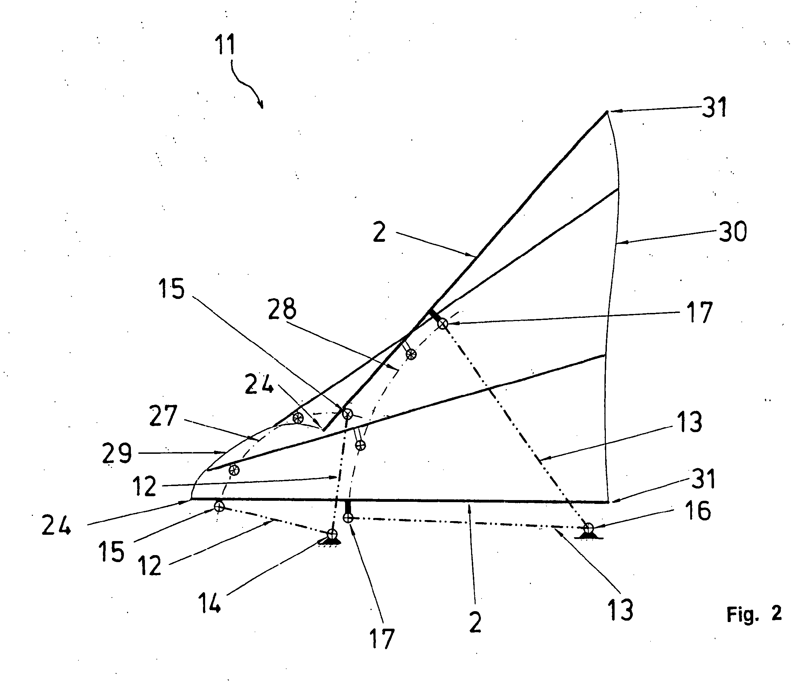

Der Gestell 3 und die Ladepritsche 2 sind mit zwei viergliedrigen Koppelgetrieben 11, die Figur 2 schematisch zeigt, an zwei Längsseiten des Gestells 3 gelenkig miteinander gekoppelt. Die Koppelgetriebe 11 sind deckungsgleich auf beiden Längsseiten des Gestells vorhanden. Dabei sind die Ladepritsche 2 und der Gestell 3 Glieder des Koppelgetriebes 11, das von der Hubeinrichtung 9 angetrieben wird. Die Ladepritsche 2 und das Gestell 3 sind durch erste und zweite Koppelglieder 12, 13 schwenkbar miteinander verbunden, wobei die zwei Koppelglieder 12, 13 eine unterschiedliche Länge aufweisen. Die beiden Koppelglieder 12, 13 bilden zusammen mit der Ladepritsche 2 und dem Gestell 3 das viergliedrige Koppelgetriebe 11.

Das Koppelgetriebe 11 weist , wie aus Figur 2 ersichtlich, Gelenkachsen 14, 15, 16, 17 auf, um die die Koppelglieder 12, 13 und die Ladepritsche 2 schwenkbar sind. Die unteren Gelenkachsen 14, 16 sind starr mit dem Gestell 3 und die oberen Gelenkachsen 15, 17 als starr mit der Ladepritsche 2 verbunden. Die Gelenkachsen 14, 15 des ersten Koppelglieds 12 sind an einem in Fahrtrichtung hinteren Ende 22 des Gestells 3 bzw. hinteren Ende 23 der Ladepritsche 2 angeordnet, wodurch die Ladepritsche 2 nach hinten kippbar ist, indem sie vorne angehoben wird.

Das erste Koppelglied 12 ist gegenüber dem zweiten Koppelglied 13 kürzer, wobei das zweite Koppelglied 13 am Gestell 3 und an der Ladepritsche 2 drehbar um die Gelenkachsen 16, 17 gelagert ist. Die Gelenkachse 16 ist an dem vorderen Ende 4 des Gestells 3 und die Gelenkachse 17 mit einem Abstand vom hinteren Ende 23 in einem Mittelbereich der Ladepritsche 2 angeordnet.

Durch Variation der Länge der Koppelglieder 12, 13 und der Lage der Gelenkachsen 14, 15, 16, 17 kann die Kippfunktion und die Schüttstellung an verschiedene Anforderungen angepasst werden. Durch die Geometrie des Koppelgetriebes 11 kann die Kinematik der Ladepritsche 2, die an dem hinteren Ende 23 der Ladepritsche 2 die Schüttkante 24 aufweist, in gewünschter Weise gewählt werden. So ist es beispielsweise möglich, die Schüttkante 24 beim Kippen der Ladepritsche 2 gleichzeitig nach oben und nach vorne zu bewegen. Durch die unterschiedlichen Längen der Koppelglieder 12, 13 ergeben sich unterschiedliche Schwenkradien 27, 28 für die Gelenkachsen 15, 17, die die gewünschte Bewegung der Ladepritsche 2 bewirken.

Das zweite, längere Koppelglied 13 weist im Bereich der gestellfesten Gelenkachse 16 einen vom Koppelglied 13 abstehenden Hebelarm 25 zur Einleitung eines Momentes auf. Der Hebelarm 25 weist in der Transportstellung der Ladepritsche 2 nach oben. An seinem freien Ende ist die Hubeinrichtung 9 mit einem Ende schwenkbar an dem Hebelarm 25 befestigt und stützt sich mit dem anderen Ende an einer Schwenkachse 26 des Gestells 3 ab.

Figur 2 zeigt in einer schematischen Darstellung nochmals die Kinematik des Koppelgetriebes 11 aus Figur 1. Dargestellt sind die vier Gelenkachsen 14, 15, 16, 17 des Koppelgetriebes 11 und die Ladepritsche 2 mit der Schüttkante 24. Die Ladepritsche 2, das erste Koppelglied 12 und das zweite Koppelglied 13 sind über die Gelenkachsen 14, 15, 16, 17 schwenkbar miteinander und mit dem in Figur 2 nicht als solches gezeichneten Gestell 3 des Kippfahrzeuges 1 verbunden. Die Zeichnung zeigt die Ladepritsche 2 sowie die Koppelglieder 12, 13 in der waagerechten Transportstellung und in der geneigten Schüttstellung sowie in zwei dazwischen liegenden Kippstellungen. Sie zeigt weiterhin die Schwenkradien 27, 28 der Koppelglieder 12, 13, die entsprechend der Länge der Koppelglieder 12, 13 unterschiedlich sind und an denen sich die Gelenkachsen 15, 17 beim Kippen der Ladepritsche 2 kreisförmig entlang bewegen.

Des Weiteren ist je eine Bewegungslinie 29, 30 für die Schüttkante 24 der Ladepritsche 2 sowie für deren gegenüber liegende Vorderkante 31 dargestellt. Wie aus der darstellten Bewegungslinie 30 ersichtlich, bewegt sich die Vorderkante 31 der Ladepritsche 2 beim Kippen der Ladepritsche 2 entlang einer einer Geraden angenäherten Linie, senkrecht von dem in der Figur 2 nicht dargestellten Gestell 3 weg. Gleichzeitig wird die Schüttkante 24 beim Kippen der Ladepritsche 2 zwangsläufig angehoben und horizontal in Richtung des zweiten Koppelgliedes 13 geführt. Dabei bewegt sich diese entlang einer stetig gekrümmten Bahn, wie die Bewegungslinie 29 zeigt.

## Patentansprüche

1. Kippfahrzeug (1), insbesondere Tieflader, das ein Gestell (3) und eine kippbar am Gestell (3) angeordnete Ladepritsche (2) mit einer Schüttkante (24) aufweist, wobei die Ladepritsche (2) von einer in etwa horizontalen Transportstellung in eine geneigte Schüttstellung und umgekehrt schwenkbar ist, **dadurch gekennzeichnet, dass** sich die Schüttkante (24) der Ladepritsche (2) beim Schwenken der Ladepritsche (2) von der Transportstellung in die Schüttstellung vertikal nach oben und gleichzeitig horizontal zum Zentrum des Gestells (3) hin bewegt.

2. Kippfahrzeug nach Anspruch 1, **dadurch gekennzeichnet, dass** die Ladepritsche (2) an einem in Vorwärtsfahrtrichtung hinteren Ende (22) des Gestell (3) angelenkt ist.

3. Kippfahrzeug nach Anspruch 1 oder 2, **dadurch gekennzeichnet, dass** die Ladepritsche (2) und das Gestell (3) nach Art eines viergliedrigen Koppelgetriebes (11) an zwei sich gegenüber liegenden Seiten des Gestells (3) gelenkig miteinander gekoppelt sind.

4. Kippfahrzeug nach Anspruch 3, **dadurch gekennzeichnet, dass** erste und zweite Koppelglieder (12, 13) zwischen dem Gestell (3) und der Ladepritsche (2) eine unterschiedliche Länge aufweisen, wobei das erste kürzere Koppelglied (12) näher an der Schüttkante (24) angeordnet ist als das zweite Koppelelement (13).

5. Kippfahrzeug nach Anspruch 3 oder Anspruch 4, **dadurch gekennzeichnet, dass** das zweite längere Koppelglied (13), das der Schüttkante (24) ferner angeordnet ist, einen vom Koppelglied (13) abstehenden Hebelarm (25) zur Einleitung einer Kraft zum Kippen der Ladepritsche (2) aufweist.

6. Kippfahrzeug nach Anspruch 5, **dadurch gekennzeichnet, dass** die Einleitung der Kraft mittels einer Hubeinrichtung (9), vorzugsweise einem Hydraulikzylinder, erfolgt, die mit einem Ende am Gestell (3) und mit einem anderen Ende an dem Hebelarm (25) des zweiten Koppelgliedes (13) angelenkt ist.

## Claims

1. Tipping vehicle (1), in particular a flat bed truck, which has a support frame (3) and a loading platform (2) located so as to be tiltable on the support frame (3) with a discharge edge (24), wherein the loading platform (2) is pivotable from a substantially horizontal transport position into an inclined discharging position and vice versa, **characterized in that** when the loading platform (2) is pivoted from the transport position into the discharging position, the discharge edge (24) of the loading platform (2) is moved vertically upwards and at the same time horizontally toward the centre of the support frame (3).

2. Tipping vehicle according to Claim 1, **characterized in that** the loading platform (2) is pivotally mounted on a rear end (22) of the support frame (3) when viewed in the forwards direction.

3. Tipping vehicle according to Claim 1 or 2, **characterized in that** the loading platform (2) and the support frame (3) are coupled together pivotally in the manner of a four-member coupled gear (11) at two oppositely situated sides of the support frame (3).

4. Tipping vehicle according to Claim 3, **characterized in that** first and second coupling members (12, 13) have a different length between the support frame (3) and the loading platform (2), wherein the first shorter coupling member (12) is located nearer to the discharging edge (24) than the second coupling element (13).

5. Tilting vehicle according to Claim 3 or Claim 4, **characterized in that** the second longer coupling member (13), which is located further away from the discharging edge (24), has a lever arm (25) jutting out from the coupling member (13) for introducing a force for tilting the loading platform (2).

6. Tilting vehicle according to Claim 5, **characterized in that** the force is introduced by means of a lifting device (9), preferably a hydraulic cylinder, which is pivotally mounted by way of one end on the support frame (3) and by way of another end on the lever arm (25) of the second coupling member (13).

## Revendications

1. Véhicule à benne basculante (1), en particulier remorque surbaissée, qui présente un châssis (3) et une plate-forme de chargement (2) disposée à basculement sur le châssis (3) et dotée d'un bord de déversement (24), sachant que la plate-forme de chargement (2) peut être pivotée d'une position de transport approximativement horizontale dans une position de déversement inclinée, et inversement, **caractérisé en ce que**, lors du pivotement de la plate-forme de chargement (2) de la position de transport dans la position de déversement, le bord de déversement (24) de la plate-forme de chargement (2) se déplace verticalement vers le haut et en même temps horizontalement en direction du centre du châssis (3).

2. Véhicule à benne basculante selon la revendication 1, **caractérisé en ce que** la plate-forme de chargement (2) est articulée à une extrémité arrière (22), dans la direction de marche avant, du châssis (3).

3. Véhicule à benne basculante selon la revendication 1 ou 2, **caractérisé en ce que** la plate-forme de chargement (2) et le châssis (3) sont mutuellement accouplés de manière articulée, sur deux côtés du châssis (3) qui se font face, à la manière d'un polygone articulé (11) à quatre éléments.

4. Véhicule à benne basculante selon la revendication 3, **caractérisé en ce qu'**un premier et un deuxième éléments d'accouplement (12, 13) entre le châssis (3) et la plate-forme de chargement (2) présentent des longueurs différentes, le premier élément d'accouplement (12), plus court, étant disposé plus près du bord de déversement (24) que le deuxième élément d'accouplement (13).

5. Véhicule à benne basculante selon la revendication 3 ou 4, **caractérisé en ce que** le deuxième élément d'accouplement (13), plus long, qui est disposé plus loin du bord de déversement (24), présente un bras de levier (25) partant en saillie de l'élément d'accouplement (13) pour introduire une force pour le basculement de la plate-forme de chargement (2).

6. Véhicule à benne basculante selon la revendication 5, **caractérisé en ce que** l'introduction de la force s'effectue au moyen d'un dispositif de levage (9), de préférence un vérin hydraulique, qui est articulé par une extrémité sur le châssis (3) et par une autre extrémité sur le bras de levier (25) du deuxième élément d'accouplement (13).
